# EUROPEAN PATENT SPECIFICATION

(11) **EP 3 233 410 B1**
(45) Date of publication and mention of the grant of the patent: **10.03.2021**
(21) Application number: 15813544.2
(22) Date of filing: 17.12.2015
(51) Int. Cl.: B29C 45/17, B29C 45/00

(54) **METHOD AND APPARATUS RELATING TO MANUFACTURE OF MOLDS FOR FORMING CONTACT LENSES**
VERFAHREN UND VORRICHTUNG ZUR HERSTELLUNG VON FORMEN ZUR HERSTELLUNG VON KONTAKTLINSEN
PROCÉDÉ ET APPAREIL SE RAPPORTANT À LA FABRICATION DE MOULES POUR FORMER DES LENTILLES DE CONTACT

(30) Priority: 19.12.2014 GB 201422768
(43) Date of publication of application: 25.10.2017
(73) Proprietor: CooperVision International Limited, Fareham PO15 5RL (GB)
(72) Inventor: GIBSON, John Robert, Eastleigh Hampshire SO53 4LY (GB); ATKINSON, Hayden, Southampton Hampshire SO31 4RF (GB); COOK, Terence Michael, Beccles Suffolk NR34 7TE (GB); COOK, James Bryan, Beccles Suffolk NR34 7TE (GB); NARDONE, Justin Daniel, Greenville, South Carolina 29607 (US); TANKERSLEY, Houston Paul, Greenville, South Carolina 29607 (US); CRAIG, James Robert, Telford Shropshire TF5 0AF (GB)
(74) Representative: Abel & Imray
(86) International application number: PCT/GB2015/054050
(87) International publication number: WO 2016/097738

(56) References cited:
- JP-A- H01 275 111
- US-A- 5 445 511

## Description

### FIELD

The present disclosure relates to methods of, and apparatus for, manufacturing, by injection molding, mold halves suitable for use in forming contact lenses. In particular, it relates to apparatus and methods for exchanging tools and/or tool assemblies in injection molding machines in order to manufacture mold halves for different powers or types of contact lenses.

### BACKGROUND

Various methods of manufacturing contact lenses are known, including spin casting, lathing (for example, by diamond turning) and cast molding (for example, using injection molded mold halves). Manufacture of soft contact lenses, including conventional hydrogel and silicone hydrogel contact lenses, presents particular difficulties, as contact lenses are delicate. Surfaces and edges of a contact lens, including surfaces providing vision correction, as well as surfaces and edges used to cast mold surfaces of a contact lens, must be manufactured and maintained to optical precision and all surfaces and edges must be manufactured within tight tolerances to provide a desired level of vision correction and/or provide a desired cosmetic appearance to the eye, and to avoid potential issues with discomfort or even damage to the eye of the wearer. Using high speed manufacturing lines, contact lenses can be manufactured in very large numbers, for example, tens of thousands each day. Increases in the rate of manufacture of contact lenses can be expected to bring down the cost of each lens. It is important, however, that increased rates of manufacture do not compromise the quality of the lenses produced.

US5445511 discloses apparatus, preferably applicable to a molding machine using the core change type dies, capable of pushing out an inserted core from a mother mold, thereby facilitating a core extracting operation by robots. A mother mold of a complementary die in the core change type dies is constituted by a main body and an intermediate plate which is disposed behind the main body and is movable in both the forward and backward directions. A core fixing and releasing mechanism is provided on the intermediate plate. Furthermore, there is provided a push-out device disposed in a clearance formed between the main body and the intermediate plate when the intermediate plate is shifted rearward. The push-out device has its one surface abutting on a front surface of a core and another surface abutting on a rear surface of the main body. The push-out device is attached to a distal end of an arm of a robot, combined with a molding machine, so that the push-out device is slidable in both the forward and backward directions and is urged rearward, if necessary.

JPH01275111 (A) discloses that inserts to be attached on a mold body are held with the arm of a robot, moved horizontally from left to right and T-clamp members are joined with the tip ends of T-grooves of the inserts. Thereafter, the piston rod of a hydraulic cylinder is moved upward to pull up the insert while the piston rod of a hydraulic cylinder is moved downward to pull down the insert, and then these inserts are placed into the insert engagement parts. The inserts are moved in the direction orthogonal to a parting line and put into insert engagement parts which have a shape and size suitable to the insert to attach them to upper and lower mold bodies with a predetermined positioning precision.

### SUMMARY

In accordance with the present disclosure, contact lenses can be manufactured by cast molding using single-use mold halves. Mold halves of a first type and of a second type can be manufactured. The mold halves can be shaped so that a mold half of the first type can be brought together with a mold half of the second type to define a cavity there between, the cavity having the shape of a contact lens that is to be manufactured. For example, the mold halves of the first type can be female mold halves, each having a concave surface of optical quality and that defines the front of the contact lens. The mold halves of the second type can then be male mold halves, each having a convex surface of optical quality and that defines the back of the contact lens. In forming the lens, a polymerizable composition can be placed in the female mold half. The male mold half can then be mated with the female mold half, defining a cavity in which the polymerizable composition is contained. The polymerizable composition can be cured in the cavity, for example, by exposure to ultraviolet light and/or by heating, and a polymerized contact lens body is thereby formed. The mold halves can then be separated and the contact lens body can be released or removed. The contact lens body can then be subjected to further processing, for example, hydration, to form a finished contact lens. The mold halves can be disposed of during the manufacturing process.

As the mold halves are typically single-use, the present disclosure provides an apparatus and method so that they can be made as efficiently as possible, without loss of quality. Contact lenses of several different powers can be made to provide lenses for different patients with different spherical refractive errors, i.e., different amounts of myopia or hyperopia. Toric lenses (lenses providing cylindrical correction), multifocal lenses, or lenses of other specific forms, can also be made. As it is not practical to provide a separate manufacturing line for each power of each type of lens, the apparatus and method of the present disclosure can use interchangeable tools or tool assemblies that can be robotically exchanged in order to manufacture different powers or types of lenses. The apparatus and method of the present disclosure reduce tool exchange time, maximize production, facilitate high speed manufacturing of contact lenses, and enable high speed manufacturing of a wide variety of powers and types of lenses.

A first aspect of the present disclosure provides apparatus for manufacturing mold halves for use in the manufacture of contact lenses. The apparatus comprises the features set out in claim 1 below.

A second aspect of the disclosure provides a method of manufacturing a contact lens. The method comprises the steps set out in claim 4 below.

Using the robot to remove the first collet from the plate, using the robot to transport and insert the first collet, using the robot to remove the replacement collet, using the robot to transport and insert the replacement collet, or any combination thereof, can comprise moving a collet extraction head of the robot in three dimensions. Using the robot to remove the first collet from the plate, using the robot to transport the first collet and insert the first collet in the collet store, using the robot to remove the replacement collet from the collet store, using the robot to transport the replacement collet and insert the replacement collet in the plate, or any combination thereof, can comprise using a position sensor located on the robot. The position sensor can be located on the collet extraction head of the robot. Using the robot to remove the first collet from the plate, using the robot to transport the first collet and insert the first collet into the collet store, using the robot to remove the replacement collet from the collet store, using the robot to transport the replacement collet and insert the replacement collet in the plate, or any combination thereof, can comprise both moving the collet extraction head of the robot in three dimensions, and using a position sensor located on the robot.

### BRIEF DESCRIPTION OF THE DRAWINGS

FIG. 1 is a perspective view of an apparatus according to an exemplary embodiment of the invention.
FIG. 2 is a fixed-plate apparatus forming part of an injection-molding apparatus, in accordance with an embodiment of the invention.
FIG. 3 is a partial cross-sectional view through a tool half of a fixed-plate apparatus, in accordance with an embodiment of the invention.
FIG. 4 is a cut-away view of a reciprocating unit of an injection-molding apparatus, in accordance with an embodiment of the invention.
FIG. 5 is a perspective view of a mounting plate forming part of a reciprocating unit, in accordance with an embodiment of the invention.
FIG. 6 is a partial cross-sectional view through a tool half of a mounting plate, in accordance with an embodiment of the invention.
FIG. 7 is a perspective view of a collet-exchange robot, in accordance with an embodiment of the invention.
FIG. 8 is a side view of a collet-exchange robot and a two-dimensional array of collets arranged in a vertical plane, in accordance with an embodiment of the invention.
FIG. 9 is a side view of a collet extraction head including gripping fingers, in accordance with an embodiment of the invention.
FIG. 10 is a front view of the collet extraction head of Fig. 9.
FIG. 11 is a perspective view of a collet store on a turntable, in accordance with an embodiment of the invention.

### DETAILED DESCRIPTION

A first aspect of the present disclosure provides
an apparatus for manufacturing mold halves for use in the manufacture of contact lenses, the apparatus comprising: an injection-molding apparatus including a plate, a removable collet in the plate; and a collet-exchange robot comprising at least one collet extraction head; characterized in that: a tool half is mounted in the removable collet; the apparatus includes a collet store for storing at least one removable collet configured to be inserted into the plate; the collet-exchange robot is configured to grip the removable collet from the plate, move the removable collet to the collet store, insert the removable collet into the collet store, grip a replacement collet from the collet store, move the replacement collet to the plate, and insert the replacement collet into the plate; wherein the injection-molding apparatus comprises a clamp configured to hold the removable collet in the plate and the removable collet includes a frustoconical rear portion and a circumferential groove upon which the clamp acts; and wherein the collet store comprises a housing for receiving a plurality of removable collets, and a turntable on which the housing is mounted, the turntable being rotatable from a first position wherein a removable collet can be manually loaded into the housing, to a second position wherein the removable collet can be removed from the collet store by the collet-exchange robot.

The skilled person will understand that specific features of embodiments of the invention described herein that are not incompatible with each other can be present in in any combination in example embodiments of the invention.

Thus, for example, the collet extraction head can be a collet extraction head that can be moved in three dimensions. In other words, the robot can be configured to move the collet extraction head not merely along a line or plane but in three-dimensional space, for example as defined by orthogonal x, y, and z axes. The collet extraction head of the collet-exchange robot can be rotatably mounted on the robot. Each collet extraction head of the collet-exchange robot can be rotatably mounted on the robot. The collet extraction head of the robot can comprise a gripping portion. Each collet extraction head of the robot can comprise a gripping portion. When the robot comprises a collet extraction head, the apparatus can further comprise a rail arrangement, and the robot can be configured to move from a position on the rail arrangement in which the collet exchange head is in front of the plate, to a position on the rail arrangement in which the collet extraction head is in front of the collet store.

[DELETED]

The apparatus can be any contact lens mold assembly embodying the invention, wherein the circumferential groove isa circumferential groove upon which a plate clamp is arranged to act.

[DELETED]

Herein, reference is made to mold halves, but it is to be understood that, although two mold halves may complement each other and together form a mold assembly, each mold half is not necessarily half of, or 50% of, the mold assembly. One mold half can comprise 20%, 30%, 40%, 45%, or the like, of a mold assembly while the other mold half can comprise 80%, 70%, 60%, 55%, or the like, of the mold assembly. Accordingly, while the two mold halves can make one whole mold assembly, it is to be understood that the two mold halves neither have to be of the same size nor do they have to be mirror images of one another. Similarly, while reference is made herein to tool halves, it is to be understood that two tool halves, that complement each other and together define a mold cavity, do not have to be of the same size or mirror images of one another.

The skilled person will understand that the features disclosed in the following paragraphs can be combined in any combination in example embodiments of the invention, and can be combined in any combination with the features disclosed above.

The collet of the apparatus can be a first collet or a replacement collet. The tool half can be carried in a front portion of the collet. The collet can include a disc-shaped front portion. The collet can include a frustoconical rear portion. The collet can include a disc-shaped front portion and a frustoconical rear portion. The circumferential groove can be, for example, around the disc-shaped front portion, if present.

Each plate of the at least one plate of the apparatus can comprise a plurality of collets. The plurality of collets can be a plurality of first collets or a plurality of replacement collets. The plurality of collets carried by the at least one plate can be arranged in a two-dimensional array.

The collet store of the apparatus can comprise a plurality of collets. The plurality of collets can comprise a plurality of first collets or a plurality of replacement collets. The plurality of collets carried by the collet store can be arranged in a two-dimensional array.

The at least one collet extraction head of the robot can be rotatably mounted on the robot. The collet exchange robot can comprise a drive unit carrying an arm, at a distal end of which is mounted a collet extraction head. The arm can be rotatably mounted on the drive unit. The arm can be rotatable from a first orientation in which the collet extraction head is on a first side of the drive unit, to a second orientation in which the collet extraction head is on a second side of the drive unit. The collet extraction head can be rotatably mounted on the arm. The collet extraction head can, for example, rotate up to 180 degrees. The apparatus can include a rail arrangement, upon which the drive unit is mounted, such that the robot is configured to move from a position on the rail arrangement, in which the collet extraction head is in front of the plate, to a position on the rail arrangement in which the collet extraction head is in front of the collet store. Thus, in the first orientation, the collet extraction head can have access to the collets in the quick-change plate, and, in the second orientation, the arm can have access to the collets in the collet store. Thus, in use, the collet exchange robot can be able to access collets from the plate, and transfer them to and insert them into, the collet store, and vice versa.

The collet extraction head can comprise a gripping portion. The gripping portion can include a sensor. The sensor can comprise a proximity sensor. The gripping portion can include a plurality of (for example, three) gripping fingers. The gripping fingers can be sized and configured to grip a circumferential groove in a collet.

The collet can have multiple circumferential grooves, or a single circumferential groove. The plate clamp and the gripping fingers of the collet extraction head can both be configured to grab, secure, fit into, or otherwise act on, the same circumferential groove of the collet or different, respective, circumferential grooves of the collet.

[DELETED]

The injection-molding apparatus, collet exchange robot, and collet store turntable can be controlled by a control unit. The control unit can control movement of the collet exchange robot arm, the collet extraction head, the drive units carrying the arm, the gripping features of the collet extraction head, the gripping features of the injection-molding apparatus, and the collet store turntable. The control unit can comprise one or more microprocessors for controlling the various drive units and motors, including those of the collet exchange robot and of the collet store turntable. Each motor and drive unit can be configured to communicate with the control unit. The one or more microprocessors can each have and execute control logic software. The drive units and motors can be connected via wiring to the control unit. The control unit can be located or housed proximate to the motors and drive units, or it can be remotely located.

The control unit can be connected to the injection-molding apparatus, collet exchange robot, and collet store turntable via at least one USB connection, wired and/or wireless connection, Ethernet connection, or any combination thereof. The control unit can receive control signals from a graphical user interface, from a control board, or the like. An operator can operate an operator control unit (OCU) for programming the control unit or for starting or stopping a manufacturing operation. Control signals generated by the OCU, automatically or in response to an operator's input, can be processed and controlled by the control unit, and delivered to the drive units and motors. The drive units and motors can communicate directly with the OCU. The injection-molding apparatus, collet exchange robot, and collet store turntable can be controlled by an autonomous control program in one or more microprocessor, giving the apparatus microprocessor autonomous capability to maneuver or manipulate the injection-molding apparatus, collet exchange robot, and collet store turntable. Commands can come from the Internet via Wi-Fi, remote computer terminal, GPRS modem, satellite phone, mobile phone, infrared, Ethernet, Firewire, other wireless or wired connection protocols, or combinations thereof.

A second aspect of the disclosure provides a method of manufacturing a contact lens, comprising: using a robot to remove a first collet from a plate in an injection-molding apparatus; using the robot to transport a replacement collet to the plate and insert the replacement collet into the plate; and forming a contact lens mold half in a second injection-molding cavity; characterized by: using the robot to transport the first collet to a collet store and insert the first collet into the collet store; and using the robot to remove the replacement collet from the collet store, the replacement collet comprising a second tool half defining at least a portion of the second injection-molding cavity for molding a contact lens mold half; and in that: the first collet comprising a first tool half mounted therein, the first tool half defining at least a portion of a first injection-molding cavity for molding a contact lens mold half; the first collet includes a frustoconical rear portion and a circumferential groove and is held in place in the plate with a clamp acting upon the circumferential groove, and the method further comprises releasing the clamp from holding the first collet prior to removing the first collet from the plate; and the collet store comprises a housing for receiving a plurality of removable collets, and a turntable on which the housing is mounted, the turntable being rotatable from a first position wherein a removable collet can be manually loaded into the housing, to a second position wherein the removable collet can be removed from the collet store by the collet-exchange robot.

Using the robot to remove the first collet from the plate, using the robot to transport and insert the first collet, using the robot to remove the replacement collet, using the robot to transport and insert the replacement collet, or any combination thereof, can comprise moving a collet extraction head of the robot in three dimensions. Using the robot to remove the first collet from the plate, using the robot to transport the first collet and insert the first collet in the collet store, using the robot to remove the replacement collet from the collet store, using the robot to transport the replacement collet and insert the replacement collet in the plate, or any combination thereof, can comprise using a position sensor located on the robot. The position sensor can be located on the collet extraction head of the robot. Using the robot to remove the first collet from the plate, using the robot to transport the first collet and insert the first collet into the collet store, using the robot to remove the replacement collet from the collet store, using the robot to transport the replacement collet and insert the replacement collet in the plate, or any combination thereof, can comprise both moving the collet extraction head of the robot in three dimensions, and using a position sensor located on the robot.

As already set out in respect of the first aspect of the invention, the skilled person will understand that specific features of embodiments of the invention described herein that are not incompatible with each other can be present in in any combination in example embodiments of the invention.

The method can be any method embodying the invention, further comprising the step of stopping production of the molds in the injection-molding apparatus before using the robot to remove the first collet from the plate. The method can further comprise re-starting production of the molds in the injection-molding apparatus after using the robot to transport the replacement collet and to insert the replacement collet into the plate. Forming a contact lens mold half in the second injection-molding cavity can comprise forming a plurality of contact lens mold halves.

The method can be any method embodying the invention, wherein using the robot to remove the first collet from the plate comprises: moving a collet extraction head of the robot to a position in front of the first collet; moving the collet extraction head forwards toward the first collet; gripping the first collet with the extraction head; and moving the collet extraction head backwards, thereby extracting the first collet from the plate. Moving the collet extraction head of the robot to a position in front of the first collet can comprise determining a distance from the extraction head to the first collet, or from the extraction head to the plate. Determining the distance can comprise using a proximity sensor on the extraction head to determine the distance from the extraction head to the first collet. Using the robot to remove the first collet from the plate can comprise rotating the collet extraction head, for example, rotating the collet extraction head around an axis of rotation by an amount of from 90 degrees to 180 degrees.

The method can be any method embodying the invention, wherein gripping the first collet with the extraction head comprises gripping the first collet at a circumferential groove formed in the first collet.

The method can be any method embodying the invention, wherein coolant is removed from coolant passages associated with the first collet, prior to the removal of the first collet from the plate, and resupplied to said coolant passages after insertion of the replacement collet into the plate. Advantageously, the removal and resupply of the coolant can be synchronized with the movement of the robot, for example to reduce the time required to exchange the first collet and the replacement collet, and hence to reduce downtime of the injection molding apparatus.

The method can further comprise clamping the replacement collet into the plate from which the first collet was extracted. The method can further comprise moving the robot to a resting location after using the robot to insert the replacement collet in the plate.

The method can be any method embodying the invention, wherein using the robot to transport the first collet and insert the first collet into the collet store comprises moving the collet extraction head of the robot to a position in front of an empty aperture in the collet store; moving the collet extraction head forward, toward the empty aperture; and releasing the first collet into the empty aperture. Moving the collet extraction head of the robot to a position in front of the empty aperture can comprise determining a distance from the extraction head to the aperture, or from the extraction head to the collet store. Determining the distance can comprise using a proximity sensor on the extraction head to determine the distance from the extraction head to the aperture. Using the robot to insert the first collet into the collet store can comprise rotating the collet extraction head of the robot by an amount of from 90 degrees to 180 degrees.

The method can be any method embodying the invention, wherein using the robot to transport the replacement collet comprises moving the collet extraction head of the robot to a position in front of the replacement collet; gripping the replacement collet with the collet extraction head; moving the collet extraction head to the position in front of the plate from which the first collet was extracted; and inserting the replacement collet into the plate. Moving the collet extraction head of the robot to a position in front of the replacement collet can comprise determining a distance from the extraction head to the first collet, or from the extraction head to the plate. Determining the distance can comprise using a proximity sensor on the collet extraction head in determining the distance. The inserting the replacement collet into the plate can comprise rotating the collet extraction head of the robot by an amount of from 90 degrees to 180 degrees.

The method can be any method embodying the invention, wherein gripping the replacement collet with the collet extraction head comprises gripping the replacement collet at a circumferential groove formed in the replacement collet.

The method can be any method embodying the invention, wherein further comprising the steps of providing a complementary contact lens mold half; filling a polymerizable lens-forming composition into a concave lens-forming surface of the mold half or into the complementary mold half; combining the mold half and the complementary mold half to form a mold assembly having a lens-shaped cavity there between, containing the polymerizable composition; curing the polymerizable composition in the filled mold assembly, to form a polymeric lens body, by polymerizing the lens-forming composition in the lens-shaped cavity; demolding and delensing the polymeric lens body from both the mold half and the complementary mold half; optionally washing, extracting, hydrating, or any combination thereof, the released polymeric lens body; placing the released polymeric lens body in a contact lens package, optionally along with packaging solution; sealing the contact lens package; and sterilizing the sealed contact lens package to form a finished contact lens package containing a finished contact lens.

The skilled person will understand that the features disclosed in the following paragraphs may similarly be combined in any combination in example embodiments of the invention.

The method can include the step of stopping production of the molds in the injection-molding apparatus, for example, to exchange a collet. Forming a contact lens mold half in the second injection-molding cavity can comprise injection-molding a female contact lens mold half, or a male contact lens mold half. Forming a contact lens mold half can comprise injection-molding a plurality of contact lens mold halves.

Using the robot to remove the first collet from the plate can comprise moving a collet extraction head of the robot to a position in front of the first collet; moving the collet extraction head forward, toward the first collet; gripping the first collet with the collet extraction head; and moving the collet extraction head backward, extracting the first collet from the plate. Gripping the first collet with the collet extraction head can comprise gripping the first collet at a circumferential groove formed in the first collet. Using the robot to transport the first collet and insert the first collet into the collet store can comprise: moving the collet extraction head so that the collet extraction head is in a position in front of an empty aperture in the collet store; moving the collet extraction head forward, toward the empty aperture; and releasing the first collet into the empty aperture. Using the robot to transport the replacement collet can comprise: moving the collet extraction head to a position in front of the replacement collet; gripping the replacement collet with the collet extraction head; moving the collet extraction head to a position in front of the plate from which the first collet was extracted; and inserting the replacement collet into the plate. The replacement collet can be inserted into the same position in the plate, from where the first collet was removed, or inserted into a different position in the plate. Gripping the replacement collet with the collet extraction head can comprise gripping the replacement collet at a circumferential groove formed in the replacement collet. The method can further comprise releasing a clamp holding the first collet in place in the plate. The method can further comprise clamping the replacement collet into the plate from which the first collet was extracted. The method can further comprise moving the robot to a resting location after using the robot to insert the replacement collet into the plate.

A collet extraction head of the robot can be moved to a position in front of the collet that is to be removed from the plate. The extraction head can be moved forward, toward the collet that is to be removed from the plate. The collet extraction head can grip the collet, for example, in a circumferential groove of the collet. A clamp holding the collet in place in the plate can be released, leaving the collet free to be removed from the plate by the robot. The collet extraction head can move backward, extracting the collet from the plate. The robot can move the collet extraction head so that the collet extraction head is at a position in front of an empty aperture in the collet store. The collet extraction head can be moved forward, toward the empty aperture. The collet can be released into the empty aperture. The collet extraction head can be moved to a position in front of the replacement collet. The collet extraction head can grip the replacement collet. The collet extraction head can move backward, extracting the replacement collet from the collet store. The collet extraction head can be moved to a position in front of the plate from which it extracted the first collet. The robot can insert the replacement collet into the plate. The replacement collet can be clamped in place in the plate, for example, by action of a clamp acting on a circumferential groove of the replacement collet. The clamp can be part of the injection-molding apparatus, for example, a part of the plate. The robot can move to a resting location after inserting the replacement collet into the plate, and production of mold halves can be restarted.

The method can further comprise the steps of: providing a complementary contact lens mold half; filling a polymerizable lens-forming composition into a concave lens-forming surface of the mold half or of a complementary mold half; combining the mold half and the complementary mold half to form a mold assembly having a lens-shaped cavity there between, containing the polymerizable composition; curing the polymerizable composition in the filled mold assembly to form a polymeric lens body by polymerizing the lens-forming composition in the lens-shaped cavity; demolding and delensing the polymeric lens body from both the mold half and the complementary mold half; optionally washing, extracting, hydrating, or any combination thereof, the released polymeric lens body; placing the released polymeric lens body in a contact lens package, optionally along with packaging solution; sealing the filled contact lens package; and sterilizing the sealed contact lens package to form a finished contact lens package containing a finished contact lens.

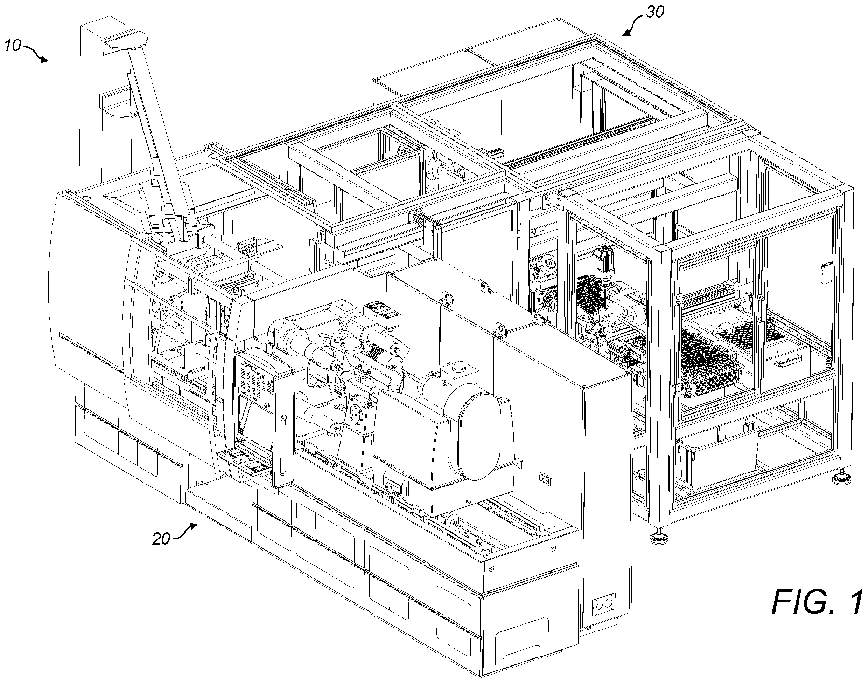

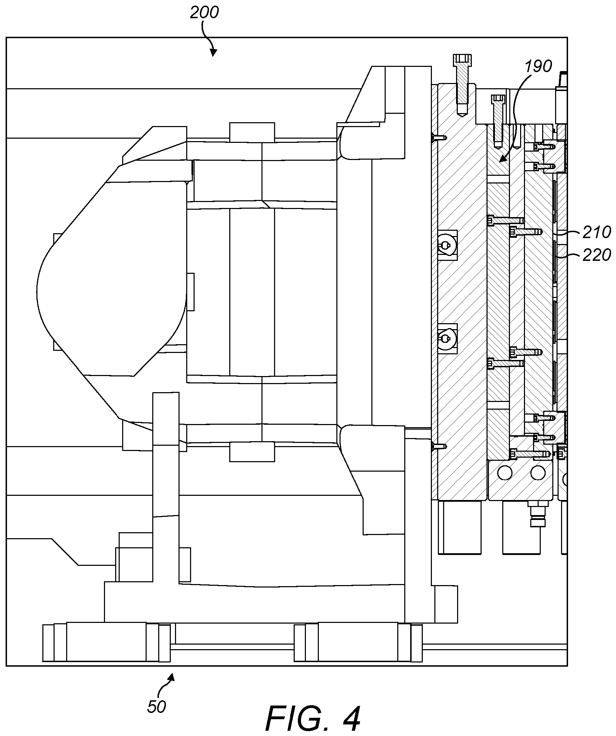

With reference to the drawings, FIG. 1 shows an exemplary apparatus 10 for manufacturing molds for use in forming a contact lens. Apparatus 10 includes an injection-molding apparatus 20 and a take-out cell 30 housing a collet store and a collet-exchange robot. Injection-molding apparatus 20 includes an injection unit and a reciprocating unit 50 (FIG. 4).

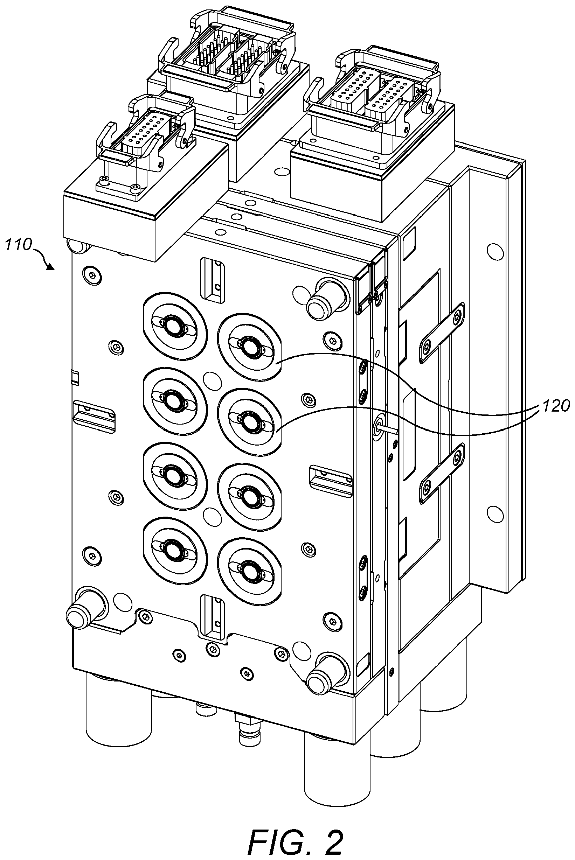

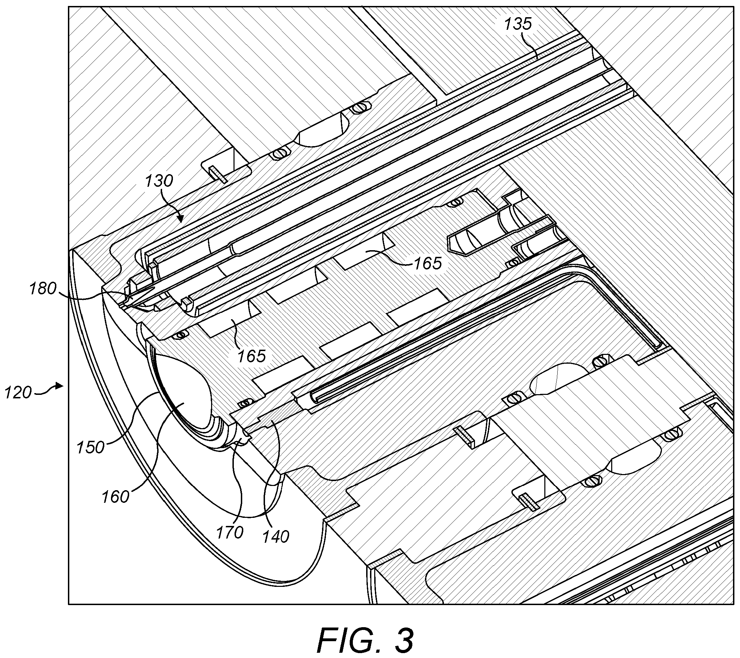

Injection unit includes a fixed plate 110 (FIG. 2) carrying, in this example, eight tool halves 120. As illustrated in FIG. 3, each tool half 120 includes an injection nozzle 130, a thermocouple 140, a tool portion 150, and a stripper plate at the front surface of fixed plate 110 (FIG. 2), which is arranged to move forward a few millimeters to eject formed molds. Tool portion 150 includes an outermost surface 160 that, in the example shown in FIG. 3, is concave and shaped to define a (convex) outer surface of a mold half to be formed in the injection cavity. In other, otherwise identical apparatus associated with this apparatus, a concave inner surface of a mold half is formed by providing a tool portion having an outermost surface that is convex. Coolant flow passages 165 are provided behind tool portion 150, passing approximately 4 mm from outermost surface 160 at their closest approach. The stripper plate defines a surface of peripheral regions 170 of the mold halves. The provision of peripheral regions 170 enables injection nozzle 130 and thermocouple 140 to be sited or located away from the center of tool portion 150, which in-turn makes room for coolant passages 165 to pass close to tool portion 150, where the surface of the contact lens mold half used to cast-mold the optic zone of a contact lens, is formed. The stripper plate is moveable from a rearward, mold-formation position, to a forward, mold-ejection position.

Reciprocating unit 50 (FIG. 4) comprises a mounting plate 190 mounted in a vertical orientation on a reciprocating drive 200.

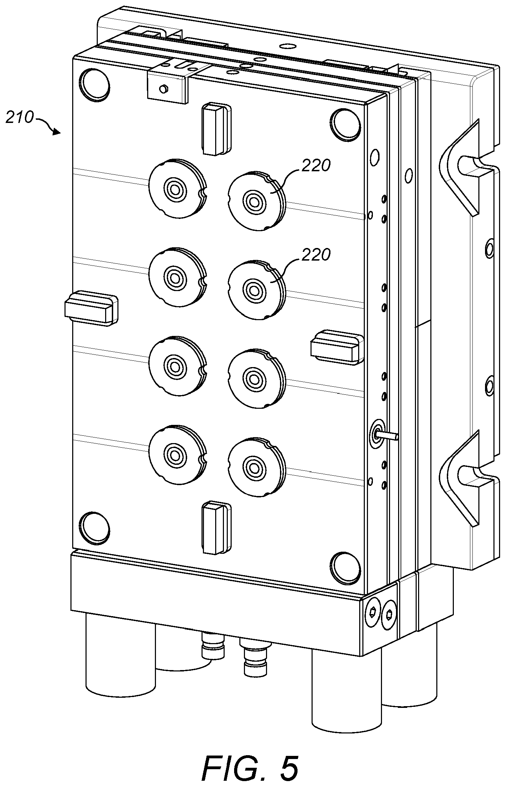

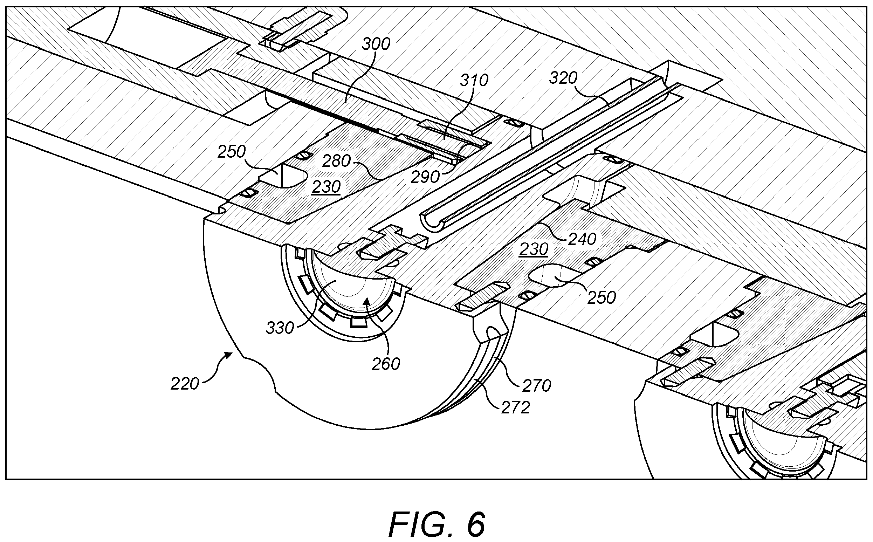

As shown in FIGS. 4-6, mounting plate 190 carries a quick-change plate 210 that includes tool halves 220 that co-operate with tool halves 120 (FIG. 2) of the injection unit, to form injection cavities for formation of the molds. Specifically, quick-change plate 210 defines eight substantially cylindrical bushings 230 each carrying a collet 240 shown in FIG. 6. Each bushing 230 includes coolant passages 250 around its outer circumference. Each collet 240 carries a tool insert 260. Each collet 240 has a front disc portion 270 and a frustoconical body portion 280. Frustoconical body portion 280 includes, toward its rear, an annular groove 290. Reciprocating unit 50 includes a clamp 300 having a distal clamping portion 310 that engages with groove 290 of collet 240 and secures collet 240 toward the rear of quick-change plate 210, away from the face of plate 210, to retain collet 240 in quick-change plate 210. This clamping prevents both leakage of coolant, and collet 240 from dropping out of quick-change plate 210 when quick-change plate 210 is not in contact with fixed plate 110. A tube 320 runs along the centre of frustoconical body portion 280 forming a coolant passage, with coolant passing inside the tube 320 from the rear of body portion 280 to the rear of tool insert 260, and then back towards the rear of body portion 280 along the outside of the tube 320

Each collet 240 can be unclamped, removed, and replaced independently of other collets 240, enabling flexible interchange of collets 240, and each collet can carry a different tool insert 260. In particular, it is not necessary to replace the whole quick-change plate 210, nor is it necessary to replace individual tool inserts 260, which are vulnerable to damage, directly.

Inserts 260 include an outermost surface 330 that is convex in this example, and that defines an optical-quality surface that in-turn defines a concave surface of a mold half. The surface of the mold half in-turn defines an optical surface of a contact lens to be formed using the mold half. Optical surface 330 and an outermost portion of collet 240 together define an inner surface of a mold half to be formed in the injection cavity.

Thus, the injection cavity for forming the mold half is defined, on one hand, by the outermost surface of tool portion 150 and the stripper plate carried in each tool half 120 of fixed plate 110 of the injection unit. On the other hand, the mold half is also defined by the outermost portion of collet 240 and optical-quality surface 330 of tool insert 260 carried by quick-change plate 210 on reciprocating unit 50.

In this arrangement, the tool providing the optical surface in the mold is in quick-change plate 210 and not in fixed plate 110 that instead has the injection-molding parts. Consequently, a different optical surface can be readily provided in a mold by changing tool insert 260, without a need to disassemble the injection mechanism.

In injection unit, a screw is arranged to transport pellets from a pellet inlet to a nozzle. The pellets then pass into the heated inlet bush, where they are heated beyond their melting point, and the resultant liquid polymer flows into a manifold and then to the outlets of the manifold and into (FIG. 3) injection nozzles 130 of tool halves 120 of fixed plate 110. The melted polymer then passes into the injection cavity for forming the mold half.

Heating is provided by a coil around injection nozzle 130. Thermocouple 140, arranged on the opposite side of tool portion 150 from injection nozzle 130, is used to monitor the temperature of the injected polymer. Heating of nozzle 130 is controlled to ensure that the liquid polymer is injected into each of the eight injection cavities at the same temperature, and hence at the same flow rate. Non-constant flow rates result in stresses in the formed mold, which in turn result in deformations and inconsistencies in contact lenses formed from the molds, for example, different levels of fit, different radii, and hence, different powers. Careful control of pressure and cooling gives consistency and uniformity; in contrast, poor control can result in a need to stop injection, selectively, into cavities for which the flow rate has deviated too far from a target value.

Once the cavity is full of polymer and a desired hold pressure profile applied, the pins in injection nozzles 130 are moved forward to shut off injection nozzles 130, from the cavities, which stops the flow of polymer. Coolant, for example, water, is circulated through coolant flow passages 165 to cool the polymer and thereby form the mold. Coolant flow passages 165, 250 in tool halves 120, 220 pass close to the outermost surface of tool portion 150 and the optical-quality surface of tool insert 260 carried by quick-change plate 210, respectively. Such an arrangement provides direct cooling in the portion of the mold half that forms the optic zone of the lens as the mold half forms in the cavity. (Rapid cooling of nucleated material results in good quality, uniform molds. Without nucleation, slower cooling in the middle of the material can result, forming bigger crystals in the middle of the material.) Once the mold is formed, reciprocating drive 200 moves mounting plate 190, and with it, quick-change plate 210, away from fixed plate 110, opening the cavity. The newly formed mold remains in tool portion 150 in fixed plate 110. The stripper plate moves from the rearward, mold-forming position, to the forward, mold-ejecting position, pushing on the peripheral regions of the mold to eject it from the tool portion in fixed plate 110. In some embodiments, one or more ejector pins can be used to eject the mold.

In use, as described above, reciprocating drive 200 moves quick-change plate 210 into contact with fixed plate 110 of the injection unit, forming the injection cavities. Molten polymer is injected and cooled, and eight molds are thereby formed. Reciprocating drive 200 then moves quick-change plate 210 out of contact with fixed plate 110 of the injection unit, leaving the mold halves in tool portions 150 of fixed plate 110.

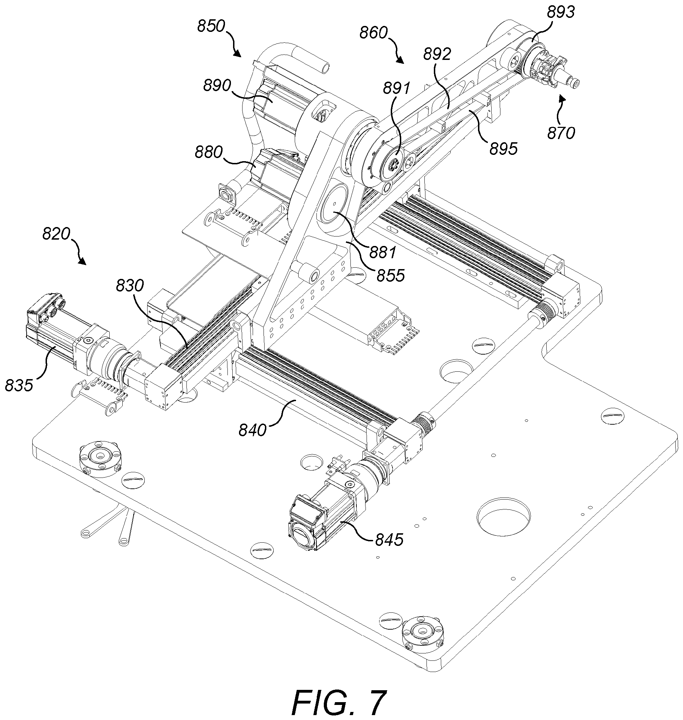

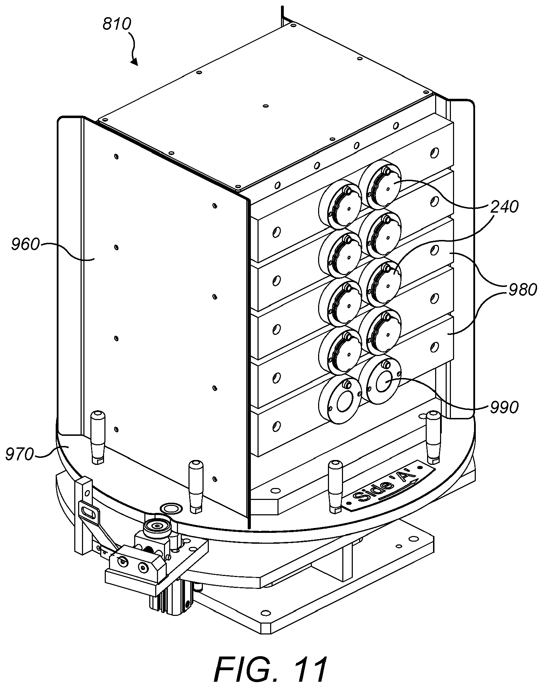

When it is desired to change the tool or tool assembly in order to change the power or type of contact lenses being manufactured, a collet-exchange subsystem is activated. The collet-exchange subsystem comprises a collet store 810 (FIG. 11) and a collet-exchange robot 820 (FIG. 7). As will be described further below, collet-exchange robot 820 removes a collet 220 from quick-change plate 210, and replaces it with a replacement collet 240 from collet store 810.

As illustrated in FIG. 7, collet exchange robot 820 comprises a drive unit 850 carrying an arm 860, at a distal end of which is rotatably mounted a collet extraction head 870. Drive unit 850 is mounted on a first rail 830, along which drive unit 850 is translated by a first linear motor 835. First rail 830 is itself mounted on a rail pair 840 that is perpendicular to first rail 830. First rail 830, and together with it, drive unit 850, are translated along rail pair 840 by a second linear motor 845. Such a mounting arrangement enables drive unit 850 to be moved to anywhere within a two-dimensional, horizontal area.

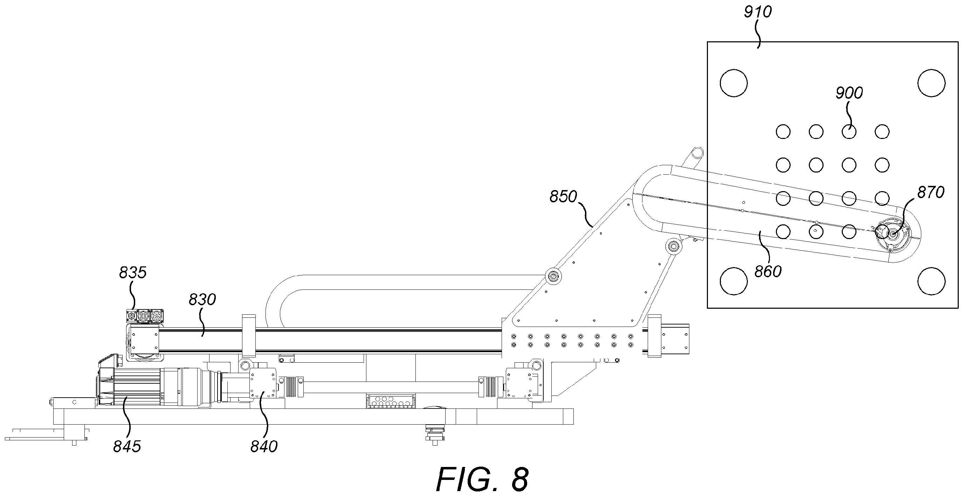

A further degree of movement is provided by the mounting of arm 860 on drive unit 850, as shown in FIGS. 7 and 8. Drive unit 850 includes two electric motors 880, 890 mounted on first rail 830 by a bracket 855. Arm 860 is rotatably mounted on an axle passing into bracket 855. The drive shaft of lower electric motor 880 carries a pulley 881 which is connected via a drive belt (not shown) to a pulley (not shown) rigidly connected to the axle on which arm 860 is mounted, so that operation of lower electric motor 880 causes arm 860 to rotate about the axle. The drive shaft of upper motor 890 carries a pulley 891 that is connected via a drive belt 892 to a pulley 893 that is rigidly connected to head 870. Operation of upper electric motor 890 thereby causes head 870 to rotate.

Quick change plate 210 and collet store 810 each presents to collet exchange robot 820 a two-dimensional array of collets 240, arranged in a vertical plane. FIG. 8 illustrates how collets 900 mounted in a plate 910 are accessed. Movement of drive unit 850 along first rail 830 moves collet extraction head 870 between vertical columns of collets 900. Rotation of arm 860, in combination with movement of drive unit 850 along first rail 830, moves collet extraction head 870 between horizontal rows of collets 900. Movement of drive unit 850 forward and backward along rail pair 840 moves collet extraction head 870 toward and away from plate 910, permitting insertion and extraction of collets 900 from plate 910. Arm 860 can also rotate about 180 degrees around an axis of rotation, from a first orientation in which collet extraction head 870 is on a first side of arm 860, and a second orientation in which collet extraction head 870 is on a second side of arm 860. Thus, collet extraction head 870 can be moved in three dimensions, enabling access to each collet 900. In take-out cell 30 (FIG. 1), arm 860 in the first orientation has access to collets 240 in quick-change plate 210, and, in the second orientation, it has access to collets 240 in collet store 810. Thus, in use, collet exchange robot 820 is able to remove collets 240 from quick-change plate 210, and transfer them to, and insert them into, collet store 810, and vice versa.

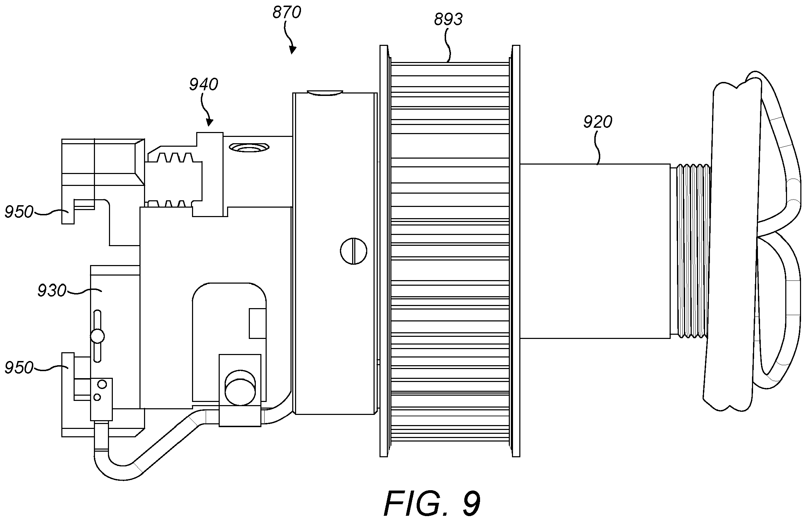

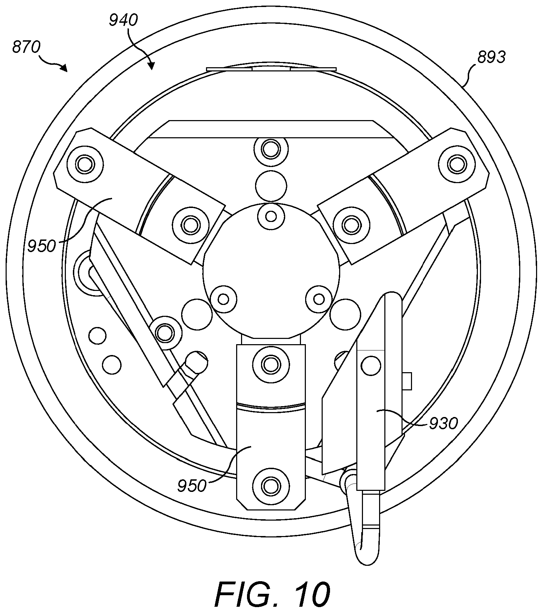

Collet extraction head 870 (FIGS. 9 and 10) comprises an axle 920, pulley 893, and gripping portion 940. Gripping portion 940 includes three gripping fingers 950. A proximity sensor 930 is also provided. With reference also to FIG. 6, gripping fingers 950 are sized and configured to grip a groove 272 that runs around the circumference of front disc portion 270 of collet 240. When gripping portion 940 is in position to grip collet 240, fingers 950 close into groove 272. Collet extraction head 870 can thus grip a collet 240 and carry it from quick-change plate 210 to collet store 810, or vice versa.

As shown in FIG. 11, collet store 810 includes a housing 960 mounted on a turntable 970. Housing 960 carries holding plates 980 that define ten circular apertures 990, each sized and configured to receive a collet 240.

When a collet 240 in the quick-change plate 210 is to be changed, the fixed plate 110 and the quick change plate 210 are separated and cooling water is evacuated from the coolant passages 250 and the tube 320. Air is blown through the coolant passages 250 and the tube 320 to remove residual water. Clamp 300 is released, leaving collet 240 free to be removed by exchange robot 820. Collet extraction head 870 of collet exchange robot 820 is then moved to a position in front of the particular collet 240 to be changed. Extraction head 870 is moved forward, and gripping fingers 950 grip groove 272 of collet 240. Exchange robot 820 moves backward, extracting collet 240 from quick-change plate 210, and then moves itself and extraction head 870 so that extraction head 870 is at a position in front of an empty aperture 990 in collet store 810. Robot 820 moves forward, and collet 240 is released from fingers 950, into aperture 990. Extraction head 870 is then moved to a position in front of replacement collet 240 that is to replace the collet that has just been moved. Gripping fingers 950 grip replacement collet 240 and extract it from collet store 810. Extraction head 870 is moved, with replacement collet 240, to the position in front of the quick-change plate from which it extracted moved collet 240. Replacement collet 240 is inserted into quick-change plate 210. Clamp 300 re-engages with annular groove 290 toward the rear of collet 240, clamping replacement collet 240 in place. Gripping fingers 950 release collet 240. Robot 820 moves out of the way, to a resting location. The supply of water is restored to the coolant passages 250 and the tube 320 and production of molds restarts. The steps involved in changing the collet 240, including the evacuation and re-supply of cooling water, are synchronised under the control of a central controller (not shown) to minimize the time required for the exchange.

All patents and publications cited herein are incorporated herein by reference in their entireties.

While the present disclosure has been described and illustrated with reference to particular embodiments, it will be appreciated by those of ordinary skill in the art that the disclosure lends itself to many different variations not specifically illustrated herein. By way of example only, certain possible variations are described herein.

In the foregoing description, where integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as preferable, advantageous, convenient, or the like, are optional and do not limit the scope of the independent claims. Moreover, it is to be understood that such optional integers or features, while of possible benefit in some embodiments of the disclosure, may not be desirable, and can therefore be absent, in other embodiments.

## Claims

1. An apparatus (10) for use in the manufacture of contact lenses, the apparatus (10) comprising:
an injection-molding apparatus (20) including a plate (210), and a removable collet (240) in the plate (210);
a collet-exchange robot (820) comprising at least one collet extraction head (870); and
wherein
the apparatus (10) includes a collet store (810) for storing at least one removable collet (240) configured to be inserted into the plate (210);
**CHARACTERISED IN THAT**:
a tool half (260) is mounted in the removable collet (240);
the collet-exchange robot (820) is configured to grip the removable collet (240) from the plate (210), move the removable collet (240) to the collet store (810), insert the removable collet (240) into the collet store (810), grip a replacement collet (240) from the collet store (810), move the replacement collet (240) to the plate (210), and insert the replacement collet (240) into the plate (210);
wherein the injection-molding apparatus comprises a clamp (300) configured to hold the removable collet (240) in the plate (210) and the removable collet (240) includes a frustoconical rear portion (280) and a circumferential groove (290) upon which the clamp (300) acts; and wherein the collet store (810) comprises a housing (960) for receiving a plurality of removable collets (240), and a turntable (970) on which the housing (960) is mounted, the turntable (970) being rotatable from a first position wherein a removable collet (240) can be manually loaded into the housing (960), to a second position wherein the removable collet (240) can be removed from the collet store (810) by the collet-exchange robot (820).

2. The apparatus as claimed in claim 1, wherein the collet extraction head is rotatably mounted on the collet-exchange robot.

3. The apparatus as claimed in claim 2, wherein the collet extraction head comprises a gripping portion.

4. A method of manufacturing a contact lens, comprising, with the apparatus according to claim 1,
- using a robot to remove a first collet from a plate in an injection-molding apparatus;
- using the robot to transport a replacement collet to the plate and insert the replacement collet into the plate; and
- forming a contact lens mold half in a second injection-molding cavity.
- using the robot to transport the first collet to a collet store and insert the first collet into the collet store; and
- using the robot to remove the replacement collet from the collet store, the replacement collet comprising a second tool half defining at least a portion of the second injection-molding cavity for molding a contact lens mold half;
**CHARACTERISED BY**
- the first collet comprising a first tool half mounted therein, the first tool half defining at least a portion of a first injection-molding cavity for molding a contact lens mold half;
- the first collet includes a frustoconical rear portion and a circumferential groove and is held in place in the plate with a clamp acting upon the circumferential groove, and the method further comprises releasing the clamp from holding the first collet prior to removing the first collet from the plate; and
- the collet store comprises a housing for receiving a plurality of removable collets, and a turntable on which the housing is mounted, the turntable being rotatable from a first position wherein a removable collet can be manually loaded into the housing, to a second position wherein the removable collet can be removed from the collet store by the collet-exchange robot.

5. The method of claim 4, wherein using the robot to remove the first collet, using the robot to transport the first collet and insert the first collet into the collet store, using the robot to remove the replacement collet, and using the replacement robot to transport the replacement collet and insert the replacement collet into the plate, comprises moving a collet extraction head of the robot in three dimensions.

6. The method of claim 4 or 5, wherein using the robot to remove the first collet from the plate comprises moving a collet extraction head of the robot to a position in front of the first collet; moving the collet extraction head forward, toward the first collet; gripping the first collet with the extraction head; and moving the collet extraction head backward, to extract the first collet from the plate.

7. The method of claim 6, wherein gripping the first collet with the collet extraction head comprises gripping the first collet at a circumferential groove formed in the first collet.

8. The method of any of claims 4 to 7, wherein coolant is removed from coolant passages associated with the first collet, prior to the removal of the first collet from the plate, and resupplied to said coolant passages after insertion of the replacement collet into the plate.

9. The method of any of claims 4 to 8, wherein using the robot to transport the first collet and insert the first collet into the collet store comprises: moving the collet extraction head so that the collet extraction head is in a position in front of an empty aperture in the collet store; moving the collet extraction head forward, toward the empty aperture; and releasing the first collet into the empty aperture.

10. The method of any of claims 4 to 9, wherein using the robot to transport the replacement collet and insert the replacement collet into the plate comprises: moving the collet extraction head to a position in front of the replacement collet; gripping the replacement collet with the collet extraction head; moving the collet extraction head to a position in front of the plate from which the first collet was removed; and inserting the replacement collet into the plate.

11. The method of claim 10, wherein gripping the replacement collet with the collet extraction head comprises gripping the replacement collet at a circumferential groove formed in the replacement collet.

12. The method of any of claims 4 to 11, further comprising clamping the replacement collet into the plate.

13. The method of any of claims 4 to 12, further comprising moving the robot to a resting location after using the robot to insert the replacement collet into the plate.

14. The method of any of claims 4 to 13, wherein forming a contact lens mold in the second injection-molding cavity comprises: providing a complementary contact lens mold half; combining the contact lens mold half and the complementary contact lens mold half to form a mold assembly having a lens-shaped cavity there between; curing a polymerizable composition in the lens-shaped cavity to form a polymeric lens body; demolding and delensing the polymeric lens body from both the contact lens mold half and the complementary contact lens mold half, to form a released polymeric lens body; optionally washing, extracting, hydrating, or any combination thereof, the released polymeric lens body; placing the released polymeric lens body in a contact lens package; sealing the filled contact lens package; and sterilizing the sealed contact lens package to form a finished contact lens package containing a finished contact lens.

## Patentansprüche

1. Vorrichtung (10) zur Verwendung bei der Herstellung von Kontaktlinsen, wobei die Vorrichtung (10), umfasst:
eine Spritzgussvorrichtung (20) mit einer Platte (210) und einer entfernbaren Spanneinrichtung (240) in der Platte (210);
einen Austauschroboter für die Spanneinrichtung (820) mit mindestens einem Spanneinrichtungs-Extraktionskopf (870); und worin
die Vorrichtung (10) einen Spanneinrichtungsspeicher (810) zum Speichern mindestens einer entfernbaren Spanneinrichtung (240), die zum Einsetzen in die Platte (210) umfasst, konfiguriert ist;
**dadurch gekennzeichnet, daß**
eine Werkzeughälfte (260) in der abnehmbaren Spanneinrichtung (240) montiert ist;
der Austauschroboter für die Spanneinrichtung (820) konfiguriert ist, um die entfernbare Spanneinrichtung (240) von der Platte (210) zu greifen, die entfernbare Spanneinrichtung (240) zum Spanneinrichtungsspeicher (810) zu bringen und die entfernbare Spanneinrichtung (240) in den Spanneinrichtungsspeicher (810) einzubringen, eine Ersatzspanneinrichtung (240) aus dem Spanneinrichtungsspeicher (810) zu greifen, die Ersatzspanneinrichtung (240) zur Platte (210) zu bringen die Ersatzspanneinrichtung (240) in die Platte (210) einzubringen;
wobei die Spritzgussvorrichtung eine Klemme (300) umfasst, die konfiguriert ist, um die entfernbare Spanneinrichtung (240) in der Platte (210) zu halten, und die entfernbare Spanneinrichtung (240) einen kegelstumpfförmigen hinteren Abschnitt (280) und eine Umfangsnut (290) aufweist, auf welche die Klemme (300) wirkt; und wobei der Spanneinrichtungsspeicher (810) ein Gehäuse (960) zum Aufnehmen mehrerer entfernbarer Spanneinrichtungen (240) und einen Drehteller (970) umfasst, auf dem das Gehäuse (960) montiert ist, wobei der Drehteller (970) von einer ersten Position, in der eine entfernbare Spanneinrichtung (240) manuell in das Gehäuse (960) geladen werden kann, zu einer zweiten Position, in der die entfernbare Spanneinrichtung (240) durch den Austauschroboter für die Spanneinrichtung (820) aus dem Spanneinrichtungsspeicher (810) entfernt werden kann, drehbar ist.

2. Vorrichtung nach Anspruch 1, wobei der Spanneinrichtungs-Extraktionskopf drehbar auf dem Austauschroboter für die Spanneinrichtung montiert ist.

3. Vorrichtung nach Anspruch 2, wobei der Spanneinrichtungs-Extraktionskopf einen Greifabschnitt umfasst.

4. Verfahren zur Herstellung einer Kontaktlinse, mit der Vorrichtung nach Anspruch 1, umfassend
- Verwenden eines Roboters zum Entfernen einer ersten Spanneinrichtung von einer Platte in einer Spritzgussvorrichtung;
- Verwenden des Roboters zum Transportieren einer Ersatzspanneinrichtung zur Platte und Einsetzen der Ersatzspanneinrichtung in die Platte; und
- Bilden einer Kontaktlinsenformhälfte in einem zweiten Spritzgusshohlraum,
- Verwenden des Roboters zum Transportieren der ersten Spanneinrichtung zu einem Spanneinrichtungsspeicher und Einbringen der ersten Spanneinrichtung in den Spanneinrichtungsspeicher; und
- Verwenden des Roboters zum Entfernen der Ersatzspanneinrichtung aus dem Spanneinrichtungsspeicher, wobei die Ersatzspanneinrichtung eine zweite Werkzeughälfte umfasst, die mindestens einen Teil des zweiten Spritzgusshohlraums zum Formen einer Kontaktlinsenformhälfte definiert;
**dadurch gekennzeichnet, dass**
- die erste Spanneinrichtung eine erste darin montierte Werkzeughälfte umfasst, wobei die erste Werkzeughälfte mindestens einen Teil eines ersten Spritzgusshohlraums zum Formen einer Kontaktlinsenformhälfte definiert;
- die erste Spanneinrichtung einen kegelstumpfförmigen hinteren Abschnitt und eine Umfangsnut umfasst und in der Platte mit einer auf die Umfangsnut wirkenden Klammer an Ort und Stelle gehalten wird, und das Verfahren ferner das Lösen der Klammer vom Halten der ersten Spanneinrichtung vor dem Entfernen der ersten Spanneinrichtung von der Platte umfasst; und
- der Spanneinrichtungsspeicher ein Gehäuse zum Aufnehmen mehrerer entfernbarer Spanneinrichtungen und einen Drehteller umfasst, an dem das Gehäuse montiert ist, wobei der Drehteller von einer ersten Position, in der eine entfernbare Spanneinrichtung manuell in das Gehäuse geladen werden kann, in eine zweite Position gedreht werden kann, wobei die entfernbare Spanneinrichtung durch den Austauschroboter für die Spanneinrichtung aus dem Spanneinrichtungsspeicher entfernt werden kann.

5. Verfahren nach Anspruch 4, wobei die Verwendung des Roboters zum Entfernen der ersten Spanneinrichtung, die Verwendung des Roboters zum Transport der ersten Spanneinrichtung und zum Einbringen der ersten Spanneinrichtung in den Spanneinrichtungsspeicher, die Verwendung des Roboters zum Entfernen der Ersatzspanneinrichtung, und die Verwendung des Ersatzroboters zum Transport der Ersatzspanneinrichtung und zum Einführen der Ersatzspanneinrichtung in die Platte das Bewegen eines Spanneinrichtungs-Extraktionskopfes des Roboters in drei Dimensionen umfasst.

6. Verfahren nach Anspruch 4 oder 5, wobei die Verwendung des Roboters zum Entfernen der ersten Spanneinrichtung von der Platte das Bewegen eines Spanneinrichtungs-Extraktionskopfs des Roboters zu einer Position vor der ersten Spanneinrichtung; das Bewegen des Spanneinrichtungs-Extraktionskopfes nach vorne in Richtung der ersten Spanneinrichtung; das Greifen der ersten Spanneinrichtung mit dem Extraktionskopf; und das Bewegen des Spanneinrichtungs-Extraktionskopfes nach hinten umfasst, um die erste Spanneinrichtung von der Platte zu extrahieren.

7. Verfahren nach Anspruch 6, wobei das Greifen der ersten Spanneinrichtung mit der Spanneinrichtungs-Extraktionskopf das Greifen der ersten Spanneinrichtung an einer umlaufenden Nut, die in der ersten Spanneinrichtung gebildet ist, umfasst.

8. Verfahren nach einem der Ansprüche 4 bis 7, wobei Kühlmittel aus den Kühlmitteldurchgängen, die mit der ersten Spanneinrichtung assoziiert sind, vor der Entfernung der ersten Spanneinrichtung von der Platte entfernt wird, und erneut in die Kühlmitteldurchgänge nach dem Einsetzen der Ersatzspanneinrichtung in die Platte zugeführt wird.

9. Verfahren nach einem der Ansprüche 4 bis 8, wobei die Verwendung des Roboters zum Transport der ersten Spanneinrichtung und zum Einsetzen der ersten Spanneinrichtung in den Spanneinrichtungsspeicher umfasst: Bewegen des Spanneinrichtungs-Extraktionskopfes, so dass sich der Spanneinrichtungs-Extraktionskopf in einer Position vor einer leeren Öffnung im Spanneinrichtungsspeicher befindet; Bewegen des Spanneinrichtungs-Extraktionskopfes nach vorne in Richtung der leeren Öffnung; und Loslassen der ersten Spanneinrichtung in die leere Öffnung.

10. Verfahren nach einem der Ansprüche 4 bis 9, wobei die Verwendung des Roboters zum Transport der ErsatzSpanneinrichtung und das Einbringen der ErsatzSpanneinrichtung in die Platte umfasst: Bewegen des Spanneinrichtungs-Extraktionskopfes in eine Position vor der Ersatzspanneinrichtung; Greifen der Ersatzspanneinrichtung mit dem Spanneinrichtungs-Extraktionskopf; Bewegen der Spanneinrichtungs-Extraktionskopfes in eine Position vor der Platte, von der die erste Spanneinrichtung entfernt wurde; und Einbringen der Ersatzspanneinrichtung in die Platte.

11. Verfahren nach Anspruch 10, wobei das Greifen der Ersatzspanneinrichtung mit dem Spanneinrichtungs-Extraktionskopf das Greifen der Ersatzspanneinrichtung an einer Umfangsnut umfasst, die in der Ersatzspanneinrichtung gebildet ist.

12. Verfahren nach einem der Ansprüche 4 bis 11, ferner umfassend das Festklammern der Spanneinrichtung in die Spannplatte.

13. Verfahren nach einem der Ansprüche 4 bis 12, ferner umfassend die Bewegung des Roboters zu einer ruhenden Position, nachdem der Roboter zum Einbringen der Ersatzspanneinrichtung in der Platte verwendet worden ist.

14. Verfahren nach einem der Ansprüche 4 bis 13, wobei das Bilden einer Kontaktlinsenform in dem zweiten Spritzgusshohlraum umfasst: Bereitstellen einer komplementären Kontaktlinsenformhälfte; Kombinieren der Kontaktlinsenformhälfte und der komplementären Kontaktlinsenformhälfte, um eine Formanordnung mit einem linsenförmigen Hohlraum dazwischen zu bilden; Härten einer polymerisierbaren Zusammensetzung in dem linsenförmigen Hohlraum, um einen polymeren Linsenkörper zu bilden; Entformen und Entspannen des polymeren Linsenkörpers sowohl von der Kontaktlinsenformhälfte als auch von der komplementären Kontaktlinsenformhälfte, um einen freigesetzten polymeren Linsenkörper zu bilden; gegebenenfalls Waschen, Extrahieren, Hydratisieren oder eine beliebige Kombination davon des freigesetzten polymeren Linsenkörpers; Platzieren des freigesetzten polymeren Linsenkörpers in einer Kontaktlinsenverpackung; Abdichten der gefüllten Kontaktlinsenverpackung und Sterilisieren der versiegelten Kontaktlinsenverpackung, um eine fertige Kontaktlinsenverpackung herzustellen, die eine fertige Kontaktlinse enthält.

## Revendications

1. Appareil (10) pour une utilisation dans la fabrication de lentilles de contact, l'appareil (10) comprenant :
un appareil de moulage par injection (20) comportant une plaque (210), et une pince (240) amovible dans la plaque (210),
un robot d'échange de pinces (820) comprenant au moins une tête d'extraction de pince (870) et dans lequel l'appareil (10) comporte un magasin de pinces (810) pour stocker au moins une pince (240) amovible configurée pour être insérée dans la plaque (210),
**caractérisé en ce que** :
une moitié d'outil (260) est montée dans la pince (240) amovible,
le robot d'échange de pinces (820) est configuré pour saisir la pince (240) amovible à partir de la plaque (210), déplacer la pince (240) amovible jusqu'au magasin de pinces (810), insérer la pince (240) amovible dans le magasin de pinces (810), saisir une pince (240) de remplacement à partir du magasin de pinces (810), déplacer la pince (240) de remplacement jusqu'à la plaque (210), et insérer la pince (240) de remplacement dans la plaque (210),
dans lequel l'appareil de moulage par injection comprend un élément de serrage (300) configuré pour maintenir la pince (240) amovible dans la plaque (210) et la pince (240) amovible comporte une portion arrière tronconique (280) et une rainure circonférentielle (290) sur laquelle agit l'élément de serrage (300) et dans lequel le magasin de pinces (810) comprend un boîtier (960) pour recevoir une pluralité de pinces (240) amovibles, et un plateau tournant (970) sur lequel est monté le boîtier (960), le plateau tournant (970) étant capable de tourner d'une première position dans laquelle la pince (240) amovible peut être chargée manuellement dans le boîtier (960), à une seconde position dans laquelle la pince (240) amovible peut être retirée du magasin de pinces (810) par le robot d'échange de pinces (820).

2. Appareil selon la revendication 1, dans lequel la tête d'extraction de pince est montée rotative sur le robot d'échange de pince.

3. Appareil selon la revendication 2, dans lequel la tête d'extraction de pince comprend une portion de saisie.

4. Procédé de fabrication d'une lentille de contact, comprenant, avec l'appareil selon la revendication 1,
- l'utilisation d'un robot pour retirer une première pince d'une plaque dans un appareil de moulage par injection,
- l'utilisation du robot pour transporter une pince de remplacement jusqu'à la plaque et insérer la pince de remplacement dans la plaque et
- la formation d'une moitié de moule de lentille de contact dans une seconde cavité de moulage par injection,
- l'utilisation du robot pour transporter la première pince jusqu'à un magasin de pinces et insérer la première pince dans le magasin de pinces et
- l'utilisation du robot pour retirer la pince de remplacement du magasin de pinces, la pince de remplacement comprenant une seconde moitié d'outil définissant au moins une portion de la seconde cavité de moulage par injection pour mouler une moitié de moule de lentille de contact,
**caractérisé par**
- la première pince comprenant une première moitié d'outil montée en son sein, la première moitié d'outil définissant au moins une portion d'une première cavité de moulage par injection pour mouler une moitié de moule de lentille de contact,
- la première pince comporte une portion arrière tronconique et une rainure circonférentielle et est maintenue en place dans la plaque avec un élément de serrage agissant sur la rainure circonférentielle, et le procédé comprend en outre la libération de l'élément de serrage pour l'empêcher de maintenir la première pince avant le retrait de la première pince de la plaque et
- le magasin de pinces comprend un boîtier pour recevoir une pluralité de pinces amovibles, et un plateau tournant sur lequel est monté le boîtier, le plateau tournant étant capable de tourner d'une première position dans laquelle une pince amovible peut être chargée manuellement dans le boîtier, à une seconde position dans laquelle la pince amovible peut être retirée du magasin de pinces par le robot d'échange de pince.

5. Procédé selon la revendication 4, dans lequel l'utilisation du robot pour retirer la première pince, l'utilisation du robot pour transporter la première pince et insérer la première pince dans le magasin de pinces, l'utilisation du robot pour retirer la pince de remplacement, et l'utilisation du robot de remplacement pour transporter la pince de remplacement et insérer la pince de remplacement dans la plaque, comprennent le déplacement d'une tête d'extraction de pince du robot en trois dimensions.

6. Procédé selon la revendication 4 ou 5, dans lequel l'utilisation du robot pour retirer la première pince de la plaque comprend le déplacement d'une tête d'extraction de pince du robot jusqu'à une position devant la première pince, le déplacement de la tête d'extraction de pince vers l'avant, vers la première pince la saisie de la première pince avec la tête d'extraction et le déplacement de la tête d'extraction de pince vers l'arrière, pour extraire la première pince de la plaque.

7. Procédé selon la revendication 6, dans lequel la saisie de la première pince avec la tête d'extraction de pince comprend la saisie de la première pince au niveau d'une rainure circonférentielle formée dans la première pince.

8. Procédé selon l'une quelconque des revendications 4 à 7, dans lequel un fluide de refroidissement est retiré de passages de fluide de refroidissement associés à la première pince, avant le retrait de la première pince de la plaque, et fourni à nouveau auxdits passages de fluide de refroidissement après l'insertion de la pince de remplacement dans la plaque.

9. Procédé selon l'une quelconque des revendications 4 à 8, dans lequel l'utilisation du robot pour transporter la première pince et insérer la première pince dans le magasin de pinces comprend : le déplacement de la tête d'extraction de pince de sorte que la tête d'extraction de pince soit dans une position devant une ouverture vide dans le magasin de pinces le déplacement de la tête d'extraction de pince vers l'avant, vers l'ouverture vide et la libération de la première pince dans l'ouverture vide.

10. Procédé selon l'une quelconque des revendications 4 à 9, dans lequel l'utilisation du robot pour transporter la pince de remplacement et insérer la pince de remplacement dans la plaque comprend : le déplacement de la tête d'extraction de pince jusqu'à une position devant la pince de remplacement la saisie de la pince de remplacement avec la tête d'extraction de pince, le déplacement de la tête d'extraction de pince jusqu'à une position devant la plaque d'où la première pince a été retirée et l'insertion de la pince de remplacement dans la plaque.

11. Procédé selon la revendication 10, dans lequel la saisie de la pince de remplacement avec la tête d'extraction de pince comprend la saisie de la pince de remplacement au niveau d'une rainure circonférentielle formée dans la pince de remplacement.

12. Procédé selon l'une quelconque des revendications 4 à 11, comprenant en outre le serrage de la pince de remplacement dans la plaque.

13. Procédé selon l'une quelconque des revendications 4 à 12, comprenant en outre le déplacement du robot jusqu'à un emplacement de repos après l'utilisation du robot pour insérer la pince de remplacement dans la plaque.

14. Procédé selon l'une quelconque des revendications 4 à 13, dans lequel la formation d'un moule de lentille de contact dans la seconde cavité de moulage par injection comprend : la fourniture d'une moitié de moule de lentille de contact complémentaire, la combinaison de la moitié de moule de lentille de contact et de la moitié de moule de lentille de contact complémentaire pour former un ensemble moule ayant une cavité en forme de lentille entre elles, le durcissement d'une composition polymérisable dans la cavité en forme de lentille pour former un corps de lentille polymère, le démoulage et le détachement du corps de lentille polymère à la fois de la moitié de moule de lentille de contact et de la moitié de moule de lentille de contact complémentaire, pour former un corps de lentille polymère libéré, éventuellement le lavage, l'extraction, l'hydratation, ou toute combinaison de celles-ci, du corps de lentille polymère libéré, le placement du corps de lentille polymère libéré dans un conditionnement de lentille de contact, le scellage du conditionnement de lentille de contact rempli et la stérilisation du conditionnement de lentille de contact scellé pour former un conditionnement de lentille de contact fini contenant une lentille de contact finie.
